# EUROPEAN PATENT APPLICATION

(11) **EP 1 956 541 A1**
(43) Date of publication of application: **13.08.2008**
(21) Application number: 07123267.2
(22) Date of filing: 14.12.2007
(51) Int. Cl.: G06Q 20/00

(54) **Combined payment and communication service method and system**

(30) Priority: 08.02.2007 NL 1033356; 11.09.2007 NL 1034361; 11.09.2007 WO PCT/NL2007/000224
(71) Applicant: DLB Finance & Consultancy B.V., 4874 LV Etten-Leur (NL); HITD Information Technology B.V., 3181 NM Rozenburg (NL)
(72) Inventor: Benschop, Dirk Leonard, 4874 LV, Etten-Leur (NL); Benschop, Henderik Reinout, 3181 NM, Rozenburg (NL)
(74) Representative: van Looijengoed, Ferry Antoin Theodorus

(57) **Abstract**

The invention relates to a combined computer-implemented payment service and communication service method in a server system configured for performing at least one of a payment service and a communication service within the server system in relation to a recipient. The method involves receiving a public unique identifier of the recipient and determining whether the recipient uses the at least one of the payment service and the communication service of the server system. A payment message is received and the payment service is performed using the public unique identifier as a payment address identifier if the recipient uses the payment service of the server system. A communication type message may also be received and the communication service is performed using the public unique identifier as a communication address identifier if the recipient uses the communication service of the server system.

## Description

### FIELD OF THE INVENTION

The invention relates to the field of electronic payment and communication services. More specifically, the invention relates to a combined computer-implemented payment service and communication service method in a server system configured for allowing payment of money to a recipient and/or the establishment of communication with said same recipient.

### BACKGROUND OF THE INVENTION

The use of communication devices for electronic services has become very popular in the last two decades. Mobile telephony and electronic banking are examples of electronic services that heavily penetrated the daily life of people. Other examples include electronic mail and use of the internet, such as visiting web pages with information, participating in electronic friends networks and contributing to web discussions.

The ever increasing possibilities of electronic services go along with a significant amount of information people need to possess to make use of these electronic services. As a typical example, one needs to know a telephone number for contacting another person by telephone, an e-mail address to send an e-mail to this same person, an uniform resource locator (URL) to visit the website of this person, a bank account number to wire money to the bank account of this person etc.

On the other hand, people do not like to disclose all these contact details to the general public. Some contact details, such as a telephone number and a bank account number are preferred to be kept secret for most people, while other details, such as a URL of a website, are allowed to be conveyed to as many people as possible.

It is known in the art to use a single telephone number for obtaining telephony services, internet services and payment services as exemplified by the ENUM initiative (www.enum.nl). The telephone number is processed and a service is requested after the processing.

However, there exists a need in the art to provide an improved payment and communication method and system.

### SUMMARY OF THE INVENTION

A combined computer-implemented payment service and communication service method is proposed. The method is performed in a server system configured for performing at least one of a payment service and a communication service within the server system in relation to a recipient. The method includes the step of receiving a public unique identifier of the recipient and determining whether the recipient uses the at least one of the payment service and the communication service of the server system. A payment message is received and the payment service is performed using the public unique identifier as a payment address identifier if the recipient uses the payment service of the server system. A communication type message may also be received and the communication service is performed using the public unique identifier as a communication address identifier if the recipient uses the communication service of the server system.

Moreover a computer program for executing the method and a carrier therefore are proposed.

The applicant also proposes a system configured for providing payment and/or communication services to make a payment of money to a recipient and to establish communication with the recipient. The system comprises a public unique identifier receiver configured for receiving a public unique identifier of the recipient and a determination module configured for determining whether the recipient uses the at least one the payment service and the communication service. Furthermore, a payment service module and/or a communication service module is provided. The payment service module is configured for executing payment services for performing payments to the recipient using the public unique identifier as a payment address identifier if the recipient uses the payment service of the server system. The communication service module is configured for executing communication services for establishing communication with the recipient using the public unique identifier as a communication address identifier if the recipient uses the communication service of the server system.

Finally, an electronic device, a computer program for such a device and a contact card are proposed using the PUID as defined above.

A single PUID can be used for a payment service and at least one communication service, e.g. telephony (claims 2 and 24; including IP telephony), electronic messages (claims 3 and 25) and web browsing and streaming media (claims 4 and 26). The single PUID can be easily remembered and used for a combination of services. The PUID is by definition a public identifier. The PUID can be used to provide services within the system as opposed to the prior art ENUM initiative that requires external system for all services. Using a PUID as a payment address identifier or a communication address identifier includes both the use of the PUID itself or the conversion of the PUID into the payment or communication identifier.

The method and system may be configured such that the public availability of the PUID does not result in e.g. undesired telephony contact or knowledge of one's bank account number as will be explained in more detail hereinafter. Payment and communication services can be enjoyed with a single device.

The PUID may be any combination of (alpha)numerical symbols. However, it may already be sufficient to use 5 or 6 letters (both upper-cast and lower-cast) to obtain a large amount of unique PUIDS. Preferably, the received PUID is not a regular communication identifier (such as a telephone address or an e-mail address) or a payment address identifier (such as a bank account number) for privacy considerations. In other words, the PUID is not usable for directly connecting to a device of a recipient and/or to make a payment to a bank account of a recipient.

It should be appreciated that in case of a payment service performed by the system, it is not required that each participant has a separate bank account number. The system may contain a single virtual amount of money and each participant can be identified as being entitled to a portion of that amount, e.g. by setting flags for that participant. Transfer of money between participants can be arranged easily in this way.

The proposal has the potential of a new and inventive payment system making other forms of payment, such as payment systems using cards, ATM's, payment by mobile phones using RFID technology etc., redundant. The proposal allows a user to use a mobile phone for using payment services that can also be used for other communication services. URL's may also be no longer required for web browsing.

The embodiments of claims 5 and 27 provide the advantage that the personal contact information (such as the bank account number and the telephony number, the electronic message address and the URL) is known only within the server system and need not to be known outside this system. The conversion of the single PUID into such personal contact information in dependence of the type of service allows people to use the payment service and/or the communication service without knowing these personal details. Connection may be made to an external payment service and/or an external communication service in accordance with claims 6 and 28. These services are offered outside the server system. The embodiments allow an immediate introduction of the server system while people are still using services of external communication companies and commercial banks.

Users and/or recipients and/or providers may themselves indicate in the server system whether they desire to use services from the server system or from external systems.

The embodiments of claims 7 and 29 allow identification of the user of the server system. Preferably, the identification involves a user name and password combination.

The embodiments of claims 8 and 30 reduce the chance of sniffing identities of users of the system.

The embodiments of claims 9 and 31 reduce the chance of abuse of the system by taking over an ongoing session between a user and the server system by a third party. The variation of the session key allows for a variation of the encryption of the data communication between the user and server system.

It is known in the art that a user of a system denies or allows other people to communicate with him by, respectively, blacklisting or white listing these people on the basis of e.g. a telephone number. An example is provided in US 2006/0147014. Also the MSN web conversation platform of Microsoft allows blocking of contacts. Furthermore, a non-prepublished international patent application PCT/NL2007/050553 of the applicant has been filed, wherein use of a personal identifier is described. However, the granularity of these methods and systems is rather coarse, essentially only allowing people to either communicate or not communicate with each other on the basis of a device identifier or a personal identifier. The embodiments of claims 10-19 and claims 32-41 provide for a system allowing fine tuning by users of criteria that should be satisfied to permit payment from and/or to and/or communication with others as will be apparent from the following description of the drawings. The items of the profile and the criteria of the requirement lists may be set by the system and/or created and/or filled in by the users/recipients. The proposal relates to permitting or denying service using information (items and criteria) that is usually irrelevant for establishing a connection for the service. Different items and/or criteria may exist or apply for different services. Reference is made to a co-pending international patent application of the applicant ("Method and system for permitting or denying service") filed on the same date as the present application, the contents of the international application being incorporated in the present application by reference in its entirety. In co-pending patent application, however, use of a PUID is not required.

Hereinafter, embodiments of the invention will be described in further detail. It should be appreciated, however, that these embodiments may not be construed as limiting the scope of protection for the present invention.

### BRIEF DESCRIPTION OF THE DRAWINGS

In the drawings:
FIG. 1 shows a schematic illustration of a combined payment and communication system according to a first embodiment and an electronic device;
FIG. 2 shows a schematic illustration of the electronic device configured for use with the system of FIG. 1;
FIGS. 3A and 3B show schematic illustrations of the server system of FIG. 1;
FIG. 4A and 4B show situations relating to a server system comprising profiles and requirement lists.
FIG. 5 shows a schematic illustration of a server system according to a second embodiment;
FIG. 6 shows a contact card of a recipient; and
FIGS. 7-11 show various time diagram illustrating step of embodiments of a method using the system of FIG. 1 and FIG. 5.

### DETAILED DESCRIPTION OF THE DRAWINGS

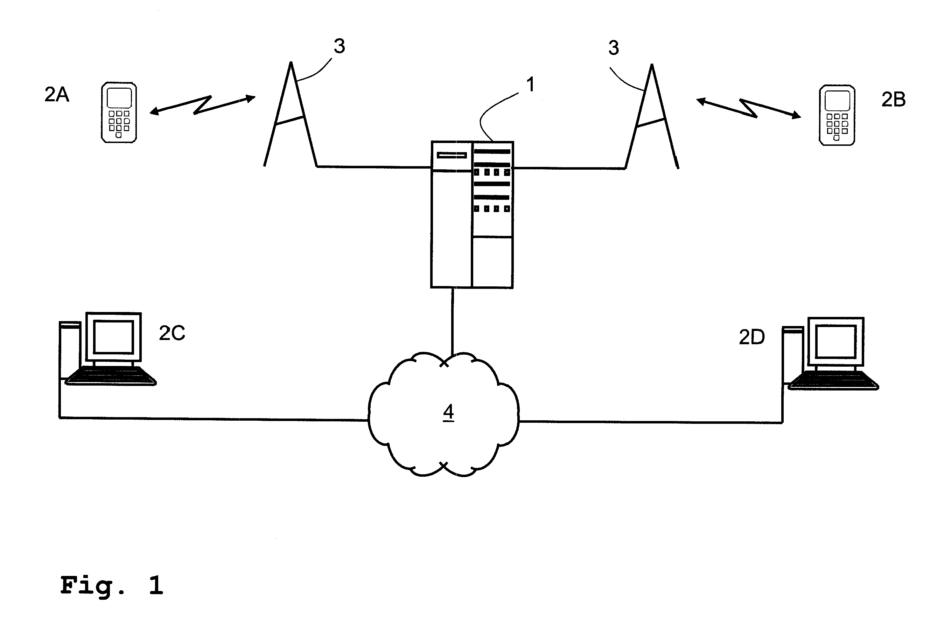

FIG. 1 shows a combined payment and communication server system 1 communicatively connected to electronic devices 2A-2D. Mobile devices 2A, 2B are connected via wireless access networks 3 to the server system 1. Stationary devices 2C, 2D are connected via network 4, such as the internet or a local area network, to the server system 1. The network connections may be secured. In the following, it will be assumed that the devices 2A, 2C are used by a user of the server system 1, whereas devices 2B, 2D are devices of a recipient.

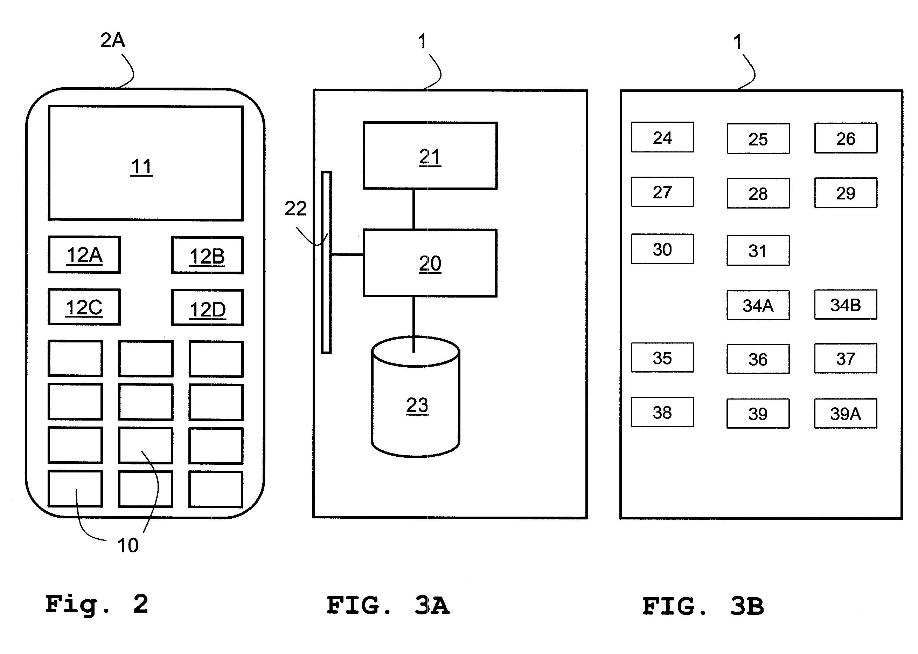

Mobile device 2A, schematically shown in FIG. 2, may be a mobile phone comprising a keyboard with a plurality of (numerical and/or alphanumerical) keys 10 and a display 11. Furthermore, the mobile device 2A comprises communication type keys 12A, 12B, 12C and a payment key 12D. The communication type keys 12A-12C enable the user of the mobile device 2A to select e.g. whether he desires to make a telephone call (telephony service), to send an electronic message (electronic messaging service) or to browse a web page on the internet (web communication service). The payment key 12D enables the user to select a payment service. It should be appreciated that the keys 12A-12D are not necessarily separate keys, but may also be implemented otherwise, e.g. by one or more soft keys using the display 11 to indicate the function of the soft key at a particular moment. Selection of a service may also be made from a software menu. It should also be appreciated that the same functionality is possible for a stationary device 2C. Finally, it is noted that the type of service desired by the user of the devices 2A, 2C may also be implicit from the message sent to the server system 1. As an example, if the user device 2A, 2C transmits a money value, it may be implicit that a payment service is requested.

FIGS. 3A and 3B show schematic illustrations of the server system 1.

The server system 1 comprises a processor 20, a memory 21, a network adapter 22 for communication with one or more of the devices 2A-2D via the networks 3, 4 and a relational database 23. It should be appreciated that the server system 1 is normally capable of connecting to more than the four electronic devices 2A-2D shown in FIG. 1.

The specific functions of the server system 1 are schematically illustrated in FIG. 3B and will now be described in further detail. It should be appreciated that the functions may be largely implemented as software code portions of one or more computer programs executed on the processor 20.

The server system 1 comprises a public unique identifier (PUID) receiver 24 configured for receiving a PUID of a recipient from the user device(s) 2A, 2C. The PUID receiver 24 may also be configured to receive a PUID of a user from the recipient device(s) 2B, 2D.

The server system 1 also contains a payment service module 25 configured for performing the payment service for making a payment to the recipient on the basis of the PUID of the recipient received by the PUID receiver 24 from the user device 2A, 2C. Furthermore, a communication service module 26 is provided that is configured for performing a communication service, such as a telephony service, an electronic message service, a streaming media service and/or a web browsing service for establishing communication with the recipient using the PUID received by the PUID receiver 24 for establishing the communication.

In order to identify the type of service requested by the users of the electronic devices 2A, 2C, the server system 1 has a communication type message receiver 27 configured for receiving a communication type message from the mobile devices 2A, 2C. The communication service module 26 is further configured for initiating the communication service in dependence of the communication type message. The type of communication requested may also be deduced from other data in the request.

It should be appreciated that a composed message may be received from the user device(s) 2A, 2C containing the PUID of the recipient, the type of service requested and/or other data such as a monetary value for a payment service, an attachment and/or other contents.

The user of the device 2A, 2C may not be aware of the particular contact information, such as a telephone number and a bank account number of the recipient. On the other hand, the recipient may desire to keep this contact information secret. To that end, the server system 1 contains a converter 28 configured for converting the PUID to a payment address identifier (e.g. a bank account number) and/or a communication address identifier (e.g. a telephone number, an e-mail address and/or a URL of a web page). The payment address identifier and the communication address identifier need not to be known by the user of the device 2A, 2C, since the PUID is sufficient to make a payment to the recipient and/or to e.g. send an electronic message to the same recipient.

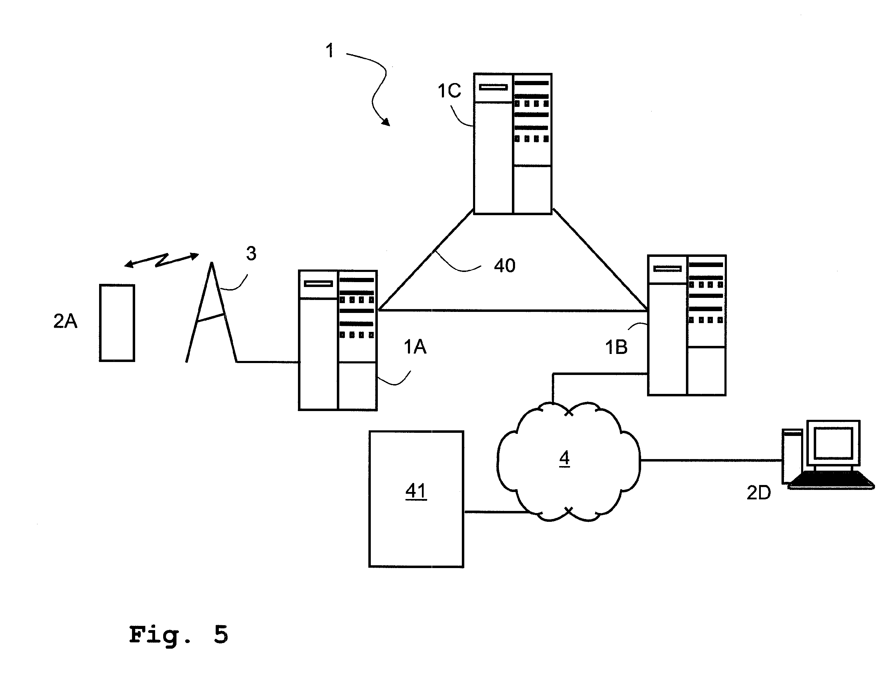

The server system 1 also contains a payment connection module 29 for connecting to an external payment system for requesting a payment service using the payment address identifier and a communication connection module 30 for connecting to an external communication system for requesting a communication service using the communication address identifier. These modules 29, 30 may e.g. be used for recipients using payment and communication services provided external to the server system 1, as shown in FIG. 5.

Conversion of the PUID into a regular contact identifier is not required. The payment service module 25 may be configured for initiating the payment service using the PUID itself instead of a payment address identifier (i.e. the PUID functions as the bank account number) and the communication service module 26 may be configured for initiating the communication service using the PUID itself instead of a communication address identifier (i.e. the PUID is the telephone number, electronic message address and/or the URL).

The server system 1 contains a determination module 31 configured for determining whether the recipient uses the payment service and/or the communication service of the server system 1 or an external system.

The server system 1 also comprises a login module 34A for receiving a login request from the device(s) 2A, 2C. The login request comprises at least one personal identifier in order to identify a user of the device 2A, 2C. Preferably, the user is identified by a combination of a user name and a password. The users are subscribers to the server system 1 in such a case.

The communication with the user devices 2A, 2C may be secured by e.g. secured network connections and/or data encryption techniques. In order to further increase the security, the server system comprises a variable session key issuer 34B. The variable session key issuer is configured for issuing different session keys in response to subsequent requests from the user devices 2A, 2C. The issuer 34B may use random numbers but also outside parameters (such as e.g. a temperature measured by a temperature sensor at a particular location) to obtain the variable keys.

The database 23 of the server system 1 may store profiles containing one or more items (e.g. characteristics of the user) and requirement lists containing one or more criteria from users of the user devices 2A, 2C and/or recipients using devices 2B, 2D. The profiles and requirement lists available to the server system 1 can be used to enable the users and/or the recipients to fine tune conditions under which they want to be involved in a payment transaction and/or to have established communication between them. It should be appreciated that this manner of enabling and disabling communication differs from the prior art in that the enabling or disabling is not primarily based on a contact identifier (such as the PUID) of the devices and/or the user.

To that end, the server system 1 comprises a tracer 35 configured for tracing at least one requirement list of a user and/or a recipient. The requirement list of the recipient can be traced using the PUID of the recipient. The same holds for the requirement list of the user, although this list may also be traced on the basis of other data in the request from the user device 2A, 2C.

Furthermore, the server system 1 has an analyser 36 configured for checking whether one or more items of a profile satisfy one or more criteria of a requirement list as will be explained in further detail below.

Two cases may be distinguished.

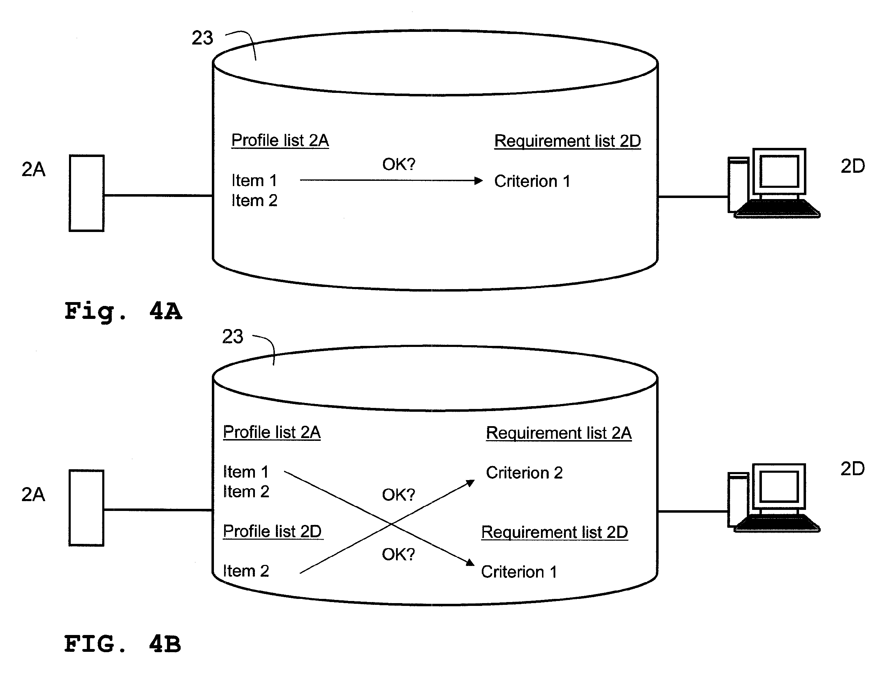

In a first case, shown in FIG. 4A, the analyser 36 only compares the one or more items of the profile of the user of the device 2A, 2C with the appropriate corresponding criteria of the intended recipient. If the items of the user profile fulfil the corresponding criteria of the recipient requirement list, payment and/or communication are allowed and the payment service module 25 and/or the communication service module 26 are activated. On the other hand, if the items do not fulfil the criteria, use of the payment service and/or the communication service by the user with respect to the particular recipient is denied. This type of analysis is suitable for white listing and/or blacklisting approaches.

In a second case, shown in FIG. 4B, the analyser 36 not only makes the above comparison, but also analyses whether or not one or more items of the recipient profile fulfil criteria of the user requirement list. Payment and/or communication is denied between the user and the recipient if a user item of the user profile does not satisfy a recipient criterion of the recipient requirement list and/or if a recipient item of the recipient profile does not satisfy a user criterion of the user requirement list. Only if the items fulfil the criteria in both directions, the payment/communication is allowed. This case can be referred to as a handshake case or a mutual approval case.

Items and corresponding criteria may relate to a variety of personal details, not being a contact identifier, including age, gender, body characteristics (e.g. hair colour, length), financial details, company details, geographic details (e.g. place of living, place of birth, address, street, p.o. box), personal items (e.g. preferences, such as brand preferences, social preferences (sports, communities, etc.)). Items may be user defined. Of course, the personal identifier (the PUID) may also be used for white listing, blacklisting and/or the mutual approval approach. Preferably, the fulfilment of all criteria by the items is analyzed.

The items and corresponding criteria may also relate to the system, such as e.g. the behaviour of the user and/or recipient on the server system 1. As an example, the server system may set a spam flag as an item in the profile of a user or recipient when this user or recipient has been notified as a spammer. Examples of such notification are provided in the international patent applications PCT/NL2007/050557 and PCT/NL2007/05055 of the applicant which are incorporated in the present patent application by reference in its entirety.

Briefly, these applications describe a system and method of reducing the proliferation of electronic messages in a server system comprising one or more servers for distributing the electronic messages. The method involves providing at least one electronic message or a portion thereof and receiving at least one spam notification signal related to said electronic message or said portion thereof. A portion of an electronic message may e.g. comprise one or more fields of the electronic message or a new portion assembled on the basis of fields or characteristics of the electronic message. Access to the electronic message (and/or the portion thereof) and/or to other (previous or future) electronic messages of the same source is restricted in response to receiving said at least one spam notification signal. The number of spam notification signals resulting in the restriction of access to the electronic message may be set. As an example, the number may be set to 50, 25, 10, 5 or even 1 spam notification signal before access to the electronic message is restricted.

In this context, the applicant has realized that the conventional rule set used for recognizing e-mail spam messages is always outdated, despite the regular updates of the rule set provided by the spam filter developers. Ultimately, only human beings will be able to recognize e-mail spam messages. Moreover, the applicant has realized that the improvement of spam filters contributes to the increase of the total amount of spam rather than reducing it. The applicant, therefore, proposes to (solely) use spam notification signals from users to detect electronic spam messages and, upon receipt of such a spam notification signal, to restrict access to the corresponding electronic message for other (users of) user devices. The server system thus allows that addressees of an electronic message themselves determine what electronic messages are spam messages and that the addressees are subsequently able to determine the access (rights) of other addressees to that message (and possibly other previous and/or future electronic messages from the same source). In other words, the spam notification signal is an order to the server system to restrict access to messages. In case of multiple spam notification signals, each signal can be regarded as a partial order. As an example, the other (users of) user devices may not display or download the electronic message. Spam filters using spam recognition rule sets, spam parameters and criteria may be absent in the server system, at least for those electronic messages for which a spam notification signal has been received.

Spam notification messages may be set or received for other services than electronic mail, where the system or the recipient/destination party finds a person abuses the system.

For example, for telephony services, a system and method can be applied for establishing a telephone connection between a first subscriber device (A-subscriber device) and a second subscriber device (B-subscriber device) in a telephone system. The telephone system is arranged for connecting the A-subscriber device (the calling party) and the B-subscriber device (the called party). The method includes receiving a request from the A-subscriber device to establish a connection with the B-subscriber device and also receiving a personal identity code of a user of said A-subscriber device. The connection can be established between the A-subscriber device and the B-subscriber device only after having received said personal identity code of said user of said A-subscriber device.

By receiving a personal identity code of a user, the telephone system is able to actually recognize the person that is requesting services of the system instead of only recognizing the device that is used. Consequently, the telephone system can apply measures to a particular user instead of only to a device as a result of the received authentication information. In other words, measures applied to a particular users cannot be avoided or circumvented by using a different device. An example of such a measure may be restricting the access of a particular user to services of the telecommunication system.

In order to make spam notification, the system and method may allow receiving one or more access restriction signals and restrict access to at least one of said telephone system and a user of said A-subscriber device or said B-subscriber device for at least one of said user of said A-subscriber device and said user of a B-subscriber device in response to receiving said one or more access restriction signals.

The user of the B-subscriber device has the possibility to restrict access to the telephone system for the *user* of the A-subscriber device if the telephone call is perceived by the user of the B-subscriber device as unsolicited or undesired. Access is restricted on the basis of the personal identity code of the user of the A-subscriber device and, therefore, this user cannot simply circumvent this measure by using a different A-subscriber device. The personal identity code may e.g. be stored such that further attempts to establish a connection by the person owning the code are first checked against this storage before a connection can be established.

The telephone system spam notification method and system is the subject of a non-prepublished patent application PCT/NL2007/050553 of the applicant which is incorporated in the present application in its entirety.

The system item relating to spam may be set in the above-described manner. The system and/or users may determine whether this spam item relates to a single service or to multiple services.

Of course, a possibility exists that the items of the user profile or recipient profile do not appropriately reflect the personal details. For example, a user or recipient item may indicate that the user or recipient is female at the age of 20, while in fact he is a 45-year old male. As another example, a user or recipient item may indicate that his bank balance is below 50000 Euros, whereas in fact his bank balance is above 100000 Euros. To that end, the server system 1 distinguishes between verified items and unverified items. As an example, if the server system 1 offers payment services itself, an item relating to the bank balance of a user or recipient can be verified internally, since the bank balance is recorded in the server system 1. In other cases, such as gender or age, verification may be performed by checking external registers, requiring users and recipients to submit a copy of the passport etc to verify the validity of the item. Verification of unverified items may also take place by verifying changes in the items, such as changes in age or gender. Age should always change upwards with one year at the time, whereas gender generally would not change at all. If such items change in an unexpected manner, the items may be set to be unverified, either indefinitely or not. The complete profile may also be marked as not trustworthy.

In order to increase certainty, the server system 1 comprises a verification indication receiver 37 configured for receiving and processing a verification indication from a device 2A, 2C of the user and/or a device 2B, 2D of a recipient. By means of the verification indication, the user and/or recipient may indicate that one or more criteria of the requirement list(s) should relate to a verified item(s) of the profile(s).

Although the items are safely secured within the server system 1 and cannot be requested as such from outside the server system 1, in principle it would be possible to obtain an estimate of one or more items, e.g. one's bank balance, by making various requests to the server system 1 sending the PUID of this person and see whether or not communication/payment service is requested or performed. The server system 1 may therefore be configured such that items of the profiles of the user and/or the recipient are by default prevented from checking. Furthermore, the server system 1 comprises a checking prevention indication receiver 38 configured for receiving and processing a checking prevention indication from a device 2A, 2C of a user and/or a device 2B, 2D of a recipient. The checking prevention indication indicates a request from a user and/or recipient that one or more items of said profile are prevented from checking by the analyser 36.

In the server system 1 as described above, there exist various situations wherein an item is not available for checking against a criterion. Examples include the situation wherein a profile does not contain an item required for checking against a criterion of a requirement list (e.g. when the item is not filled in or does not even exist) and the situation wherein an item is prevented from checking by the default setting or by a checking prevention indication signal (see previous paragraph). In order to allow the user or recipient to decide to allow payment and/or communication, the server system 1 comprises a notification transmitter 39 configured for transmitting a notification request to a device 2A-2D of the user or recipient from whose profile the check would be made, e.g. by means of a pop-up screen on the device. The notification request may present an option to ignore e.g. the checking prevention indication to permit checking of said at least one item against a corresponding criterion of a requirement list. If the user/recipient permits checking, the prevention indication may be lifted either permanently or temporarily by the server system 1 receiving such an instruction from the devices 2A-2D. As an example, if a user desires to communicate with a recipient by telephone and the recipient requirement list indicates that this is only possible if his bank balance is checked as an item on the user profile list against a corresponding criterion on the recipient requirement list, the user should first permit checking of his bank balance before the communication is established. The release of the checking prevention indication does not mean that this information is communicated to the other party. It only involves the availability of an item for a check against the criteria of a requirement list. Of course, the recipient may also unblock his items, if desired, e.g. for marketing purposes.

Items and criteria may be set to apply for one or more services using service selector 39A.

The server system 1 of FIG. 5 is an embodiment comprising multiple servers 1A-1C, wherein server functions and/or data are e.g. distributed over multiple servers connected by secured network connections 40. At least one of the payment and communication services is executed by an external system 41. The external system 41 may be connected via a gateway (not shown) to the server system 1. Items and criteria may be distributed over the servers 1A-1C and be retrieved from the various servers 1A-1C upon request of a service. Such an embodiment may e.g. be useful to safeguard privacy.

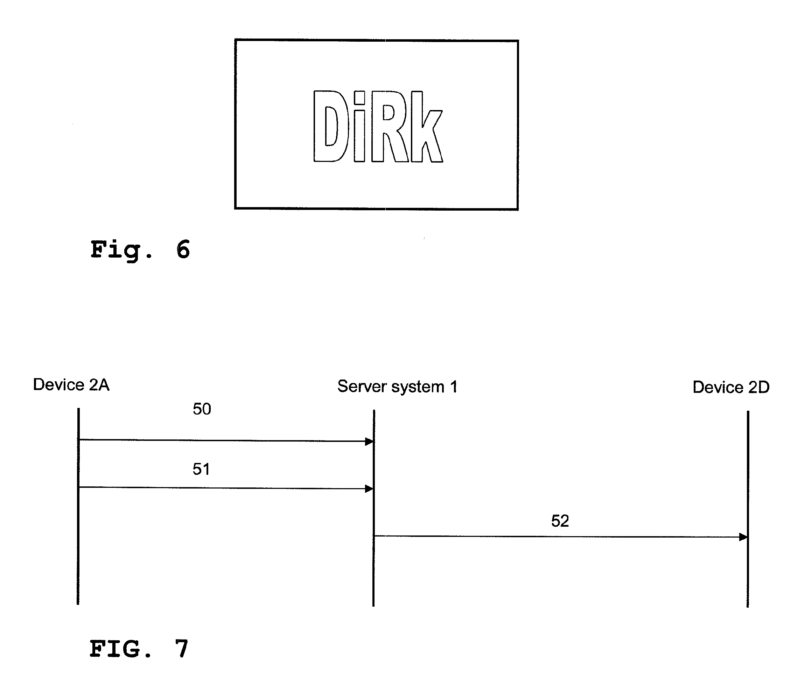

The operation of the server system 1 will now be described for several practical situations with reference to FIGS. 7-11.

First, it is assumed that a business transaction is to be arranged between Ghislaine (user) and Dirk (recipient). Ghislaine only has a business card of Dirk as shown in FIG. 6. The below table shows details of Dirk and Ghislaine stored in the database 23 of the server system 1.

| Name | **Ghislaine** | **Dirk** |
|---|---|---|
| | | |
| PUID | Ghisje | DiRk |
| | | |
| Username | ***** | ****** |
| Password | ***** | ****** |
| | | |
| Telephone number | +31 20 51 10 930 | |
| Bank account | | 50.37.56.587 |
| E-mail address | | |
| Website | | www.scipioo.com |

FIG. 7 shows the situation wherein Ghislaine attempts to contact Dirk by telephone. She logs in on the server system 1 using login module 34A with her user name and password in step 50. Then, in step 51, she makes a phone call using the PUID "DiRk" which is received by the PUID receiver 24. The database does not store a separate telephone number for the device 2B of Dirk and the determination module 31 determines that Dirk uses the telephony service of the server system 1 (e.g. using an internal code). In this situation, the telephone connection can be made in step 52 via the telephony service module 26 using the PUID of Dirk, or a derivative thereof, as the telephone number of device 2B if the device accepts such a request. In this case, the telephone device does not require a traditional SIM card. However, it is also possible to convert the PUID "DiRk" to a traditional telephone number (available in the system, e.g. entered in the table) using converter 28 and connect to the traditional telephone number of device 2B. Ghislaine and Dirk may now discuss the business transaction.

In the telephone conversation, it is discussed that Ghislaine should wire a payment of € 100 000 to the bank account of Dirk. Ghislaine is not aware of the bank account number of Dirk.

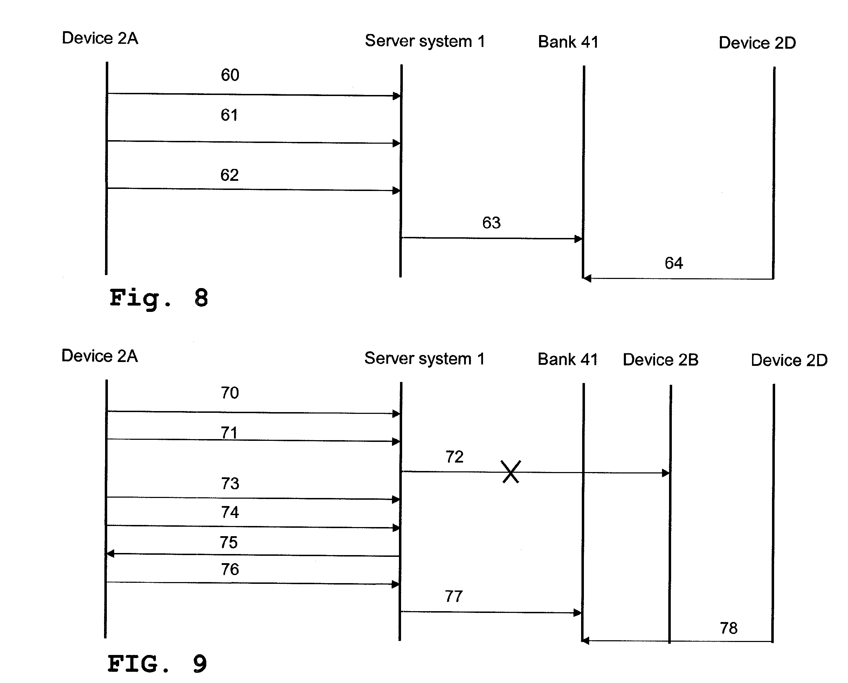

In FIG. 8, Ghislaine logs in on the server system 1 using login module 34A again using device 2A in step 60. Of course, logging in would not necessarily be required twice if the connection with server system 1 was maintained. The server system 1 presents an interface of the display 11 using a first session key. Ghislaine again enters the PUID "DiRk" to make the payment to Dirk in step 61 and the server system 1 presents a further screen to enter a payment amount under a second session key, different from the first session key. The payment amount of € 100 000 is received by the server system 1 in step 62. Of course, the payment amount may also be received by the server system 1 in step 61, i.e. together with the PUID of the recipient.

The determination module 31 determines that Dirk does not use the bank services of the server system 1, since Dirk has filled in an external bank account number in the table. In response to this determination, the payment connection module 29 is activated to make the payment to an account on an external bank system 41 (FIG. 5) in step 63. Dirk may now use his device 2D to check with his bank 41 whether or not the payment has been made (step 64).

In the above example, it has been assumed that Ghislaine and Dirk have not made use of the profile and requirement list options provided to implement additional security measures. Such security measures may be desired, since the PUID is intended to be publicly available.

The profiles and requirement lists of Ghislaine and Dirk are provided in the below table.

| | **Profile PUID (Ghisje)** | **Profile PUID (DiRk)** |
|---|---|---|
| Gender | Female | Male |
| Age | 25 | 45 |
| Bank balance | BLOCKED | € 1 500 000 |
| Industry | ICT (not verified) | ICT |
| | | |
| SPAM notification | YES | NO |
| | | |
| | **Requirement list Ghisje** | **Requirement list DiRk** |
| | | |
| | Industry = ICT | Industry = ICT (verification required) |
| | | Bank balance > € 50 000 (for payment services) |

FIG. 9 shows a login step 70 of Ghislaine using the login module 34A for verifying the user name and password. In step 71, a composed message containing the PUID "DiRk" and an indication that a telephony service is requested is received by the PUID receiver 24 in combination with the communication type message receiver 27.

The PUID "DiRk" is used by the tracer 35 to trace the requirement list of Dirk. The requirement list comprises a first criterion relating to the type of industry the other party should be involved in, viz. information and communications technology industry (ICT). This criterion should be fulfilled for all services. Moreover, the industry item of the profile of the other party (in this case Ghislaine) should be a verified item. The requirement list of Dirk comprises a second criterion prescribing that the bank balance of the other party should be be higher than € 50 000. However, this criterion is only relevant for payment services. Dirk may have entered these criteria in the server system 1 before the login step 70.

In the present case, the telephony service will not be performed, since the analyser 36 will find that, although the industry item in the profile of Ghislaine is ICT, this is not a verified item, such that the analyser will not instruct the telephony service initiator 26 to initiate a telephone connection (indicated by the cross in step 72).

This situation will force Ghislaine to have the industry item of her profile verified in the server system 1, e.g. by submitting contract details to the moderator of the server system 1. If this item is verified, a telephone connection between device 2A and device 2B can be established via the telephone service initiator 26 in accordance with the case of FIG. 7.

It should be noted that if Dirk's requirement list would have contained a criterion that Ghislaine should not have been notified as a spammer on the server system 1, the analyser 36 would have never triggered the telephone service module 26, since Ghislaine's profile list includes a system item indicating that she has received a spam notification. This item is by default a verified item that could not be prevented from checking by the analyser 36. The system item may either be valid for only one service or for multiple services. In a practical situation, it is envisaged that a spam criteria is by default part of the requirement list of any user and recipient (but may be removed from this list, as Dirk has done in the present example).

After the telephone conversation, Ghislaine again desires to wire a sum of € 100 000 to the (external) bank account of Dirk. Ghislaine submits the PUID "DiRk" to the server system 1 in step 73 together with an indication message that a payment service is required. This indication may be implicit by entering the amount of € 100 000 in an amount field on the display 11, which amount is received in step 74. The PUID, the indication and the amount field may be received in a single composed message. It is not required that the PUID is sent for each service separately.

After tracing the requirement list of Dirk using tracer 35 on the basis of the PUID of Dirk, the analyser 36 finds that Dirk's requirement list also has a criterion that he should only be checked for payment services wherein the other party has a bank balance of at least € 50 000. When checking the corresponding item in the profile of Ghislaine, the analyser finds that this item is prevented from checking. This may be the default setting or may be set by Ghislaine using the checking prevention indication receiver 38 of the server system 1 (see table: BLOCKED). It should be appreciated that all items and criteria are not communicated to users of the server system 1 as such, but may be available for checking by the analyser 36, if not prevented. Consequently, the analyser 36 can not perform the check for the bank balance of Ghislaine in this case. The analyser 36 can again perform the check of the industry requirement. It is noted that if the bank balance requirement was also applicable for other services, such as the telephony service, the telephony service was not initiated before allowing the check of the bank balance (and if the bank balance was found to be insufficient, a telephony service would not be initiated). That is, criteria may either be applicable to one service or to a plurality of services.

Ghislaine may have chosen an option that in such a case, the notification transmitter 39 of the server system 1 notifies her, step 75, of the fact that Dirk's requirement list requires checking of her bank balance before a payment can be made. She may then chose to (temporarily) permit checking of her bank balance item, step 76. Subsequently, the analyser may perform the check against the bank balance criterion of Dirk's requirement list and trigger the payment service module 25 to start the payment transaction (steps 77, 78 in accordance with steps 63, 64 of FIG. 8).

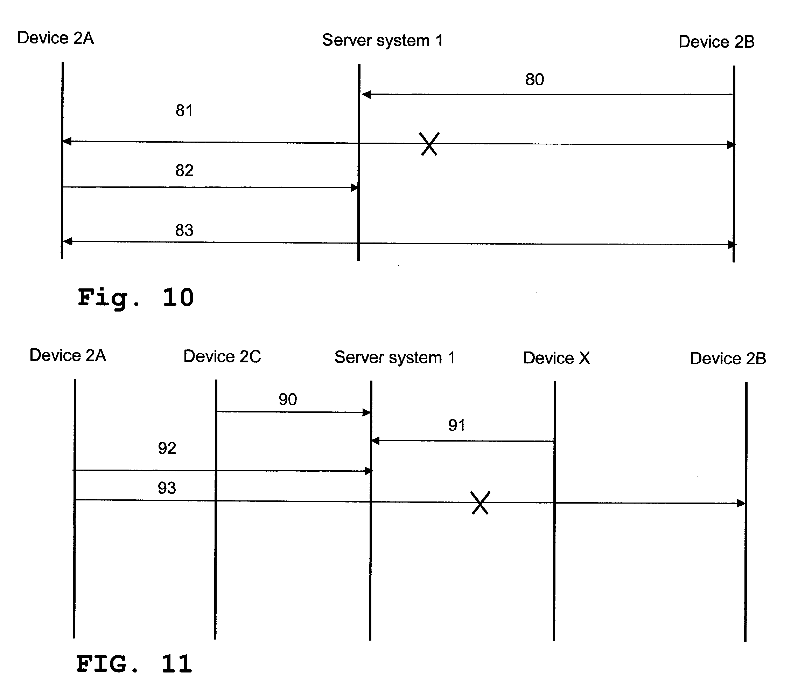

FIG. 10 provides yet another example of a method and system for permitting or denying service.

Deirdre and Henk have agreed to make a phone call. Henk uses his device 2B. The system 1 in step 80 receives the PUID of Deirdre and tracer 35 traces the requirement list of Deirdre on the basis of the PUID. The profile of Henk is also traced and the analyser 36 checks whether the items of Henk's profile satisfy the applicable corresponding criteria of Deirdre's requirement list. It is assumed that the analyser 36 finds that the items of Henk's profile satisfy the criteria of Deirdre's requirement list.

However, the system 1 has been set that mutual approval is required for initiating this service and, therefore, the telephone communication is not yet effected (indicated by the cross in step 81).

At a later moment, Deirdre contacts the system 1 (step 82) using Henk's telephone number. The tracer 35 now traces Henk's requirement list and the analyser 36 checks whether Deirdre's items match the criteria of Henk's requirement list. If the analyser 36 finds that the items of Deirdre's profile satisfy the criteria of Henk's requirement list, telephone communication may be initiated (step 83), either directly after the check or at a later time.

The embodiment of FIG. 10 uses the mutual approval method described with reference to FIG. 4B. It should be appreciated, however, that mutual approval does not necessarily require both parties to contact the system 1. In the above example, Henk's call would allow both checks to be made on the basis of the telephone number of Ghislaine and the contact details of Henk (e.g. his login data, a telephone number, the IMEI code etc.).

FIG. 11 shows a case wherein a user sends a spam e-mail from his user device 2C (step 90). In step 91, the system 1 receives a spam notification message of an arbitrary user device X. The spam notification message may be obtained in a manner described in the non-prepublished international patent applications PCT/NL2007/050557 and PCT/NL2007/050555 of the applicant which are incorporated in the present application by reference in its entirety. The profile of the user now has a system item reflecting that the user has been notified as a spammer. In step 92, the user makes a telephone call to recipient device 2B with his mobile phone 2A. The tracer 35 of the system 1 traces the recipient requirement list of the recipient. The analyser 36 finds out that the recipient requirement list contains a criterion that the recipient would not like to be involved in a service initiated by someone that is registered as a spammer. Consequently, a telephone connection will not be established, indicated by the cross in step 93.

It should be noted that many more examples have been envisaged of practical applications of the single PUID in combination with internally provided services, the profiles with items and the requirement lists with corresponding criteria. Practical applications include marketing applications, dating site applications, etc. One or more items of profiles may be unblocked permanently or permanently in exchange for e.g. free communication, free banking or other advantages. All such applications fall under the scope of protection of the present patent application.

## Claims

1. A combined computer-implemented payment service and communication service method in a server system configured for performing at least one of a payment service and a communication service in relation to a recipient within said server system, the method comprising the steps of:
- receiving a public unique identifier of said recipient;
- determining whether said recipient uses said at least one of said payment service and said communication service of said server system;
- receiving a payment message and performing said payment service using said public unique identifier as a payment address identifier if said recipient uses said payment service of said server system;
- receiving a communication type message and performing said communication service using said public unique identifier as a communication address identifier if said recipient uses said communication service of said server system.

2. The method according to claim 1, wherein said communication type message is indicative of telephone communication, comprising the step of requesting a telephone connection with a user device of said recipient using said public unique identifier.

3. The method according to claim 1 or 2, wherein said communication type message is indicative of electronic message communication, comprising the step of transmitting an electronic message to a user device of said recipient using said public unique identifier.

4. The method according to one or more of the preceding claims, wherein said communication type message is indicative of web communication, comprising the step of requesting at least one of a web page and streaming media from said recipient using said public unique identifier.

5. The method according to one or more of the preceding claims, comprising the step of converting said public unique identifier to at least one of a payment address identifier and a communication address identifier.

6. The method according to claim 5, further comprising the step of:
- connecting to an external payment system for performing said payment service using said payment address identifier; or
- connecting to an external communication system for performing said communication service using said communication address identifier.

7. The method according to one or more of the preceding claims, further comprising the step of receiving a login request from a payment device or communication device, said login request comprising at least one personal identifier.

8. The method according to claim 7, wherein at least said login request is transmitted over a network to said server system in a secure manner.

9. The method according to one or more of the preceding claims, further comprising the steps of:
- receiving at least a first request and a subsequent second request from a user device;
- issuing a first session key for use in said first request and a second session key, different from said first session key, for use in said subsequent second request.

10. The method according to one or more of the preceding claims, wherein said server system comprises at least a requirement list of said recipient and a profile of a user of said payment service and/or said communication service and wherein said requirement list comprises at least one criterion regarding an item of said profile, further comprising the steps of:
- receiving said public unique identifier of said recipient from a device of said user;
- tracing said requirement list of said recipient using said received public unique identifier of said recipient;
- checking whether said item of said profile satisfies said at least one criterion of said requirement list; and
- denying at least one of said payment service and said communication service if said item does not satisfy said criterion.

11. The method according to one or more of the preceding claims 1-9, wherein said server system comprises at least a first profile and first requirement list of a user of said server system and a second profile and a second requirement list of said recipient, said first profile and second profile comprising at least one user item and at least one recipient item, respectively, and said first requirement list and said second requirement list comprising at least one user criterion of said user and at least one recipient criterion of said recipient, respectively, said method further comprising the steps of:
- receiving said public unique identifier of said recipient from a device of said user;
- tracing said first requirement list of said user;
- tracing said second requirement list of said recipient using said received public unique identifier of said recipient;
- checking whether said at least one user item of said first profile satisfies said at least one recipient criterion of said second requirement list;
- checking whether said at least one recipient item of said second profile satisfies said at least one user criterion of said first requirement list;
- denying at least one of said payment service and said communication service if at least one of said user item of said first profile does not satisfy said recipient criterion of said second requirement list and said recipient item of said recipient profile does not satisfy said user criterion of said first requirement list.

12. The method according to claim 11, comprising the step of tracing said first requirement list of said user using a public unique identifier of said user received from a device of said recipient or other login data.

13. The method according to one or more of the claims 10-12, wherein said criterion is independent of said public unique identifier of said user and/or said recipient.

14. The method according to one or more of the claims 10-13, wherein said at least one item comprises a system item and/or a user defined item.

15. The method according to claim 14, wherein a system item is a spam related item.

16. The method according to one or more of the claims 10-15, wherein said items of said profile(s) comprise verified items and unverified items.

17. The method according to claim 16, wherein said server system receives from at least one of a device of said user and a device of said recipient a verification indication that said at least one criterion of said requirement list relates to a verified item of said profile.

18. The method according to one or more of the claims 10-17, wherein one or more of said items are prevented from checking and wherein, optionally, said server system receives from at least one of a device of said user and a device of said recipient a checking prevention indication indicating that one or more items of said profile are prevented from checking.

19. The method according to one or more of the claims 10-18 comprising the step of transmitting a notification request to a device of the user or recipient for whom a checking prevention indication applies, said notification request presenting an option to ignore said checking prevention indication to permit checking of said at least one item against a corresponding criterion of a requirement list.

20. A computer program comprising software code portions adapted for, when installed on and executed by an electronic system, performing the method according to claims 1-19.

21. A carrier containing the computer program of claim 20.

22. A system configured for providing payment and communication services and for performing within said system at least one of a payment service and a communication service with a recipient, the system comprising:
- a public unique identifier receiver configured for receiving a public unique identifier of said recipient;
- a determination module configured for determining whether said recipient uses said at least one said payment service and said communication service;
- a payment service module configured for executing payment services for performing payments to said recipient using said public unique identifier as a payment address identifier if said recipient uses said payment service of said server system;
- a communication service module configured for executing communication services for establishing communication with said recipient using said public unique identifier as a communication address identifier if said recipient uses said communication service of said server system.

23. The system according to claim 22, further comprising a communication type message receiver configured for receiving a communication type message indicating the type of communication requested and wherein said communication service module is configured for requesting or performing a communication service in dependence of said communication type message.

24. The system according to claim 23, wherein said communication type message is indicative of telephone communication and said communication service module is configured establishing a telephone connection with a user device of said recipient using said public unique identifier.

25. The system according to claim 23 or 24, wherein said communication type message is indicative of electronic message communication and wherein said communication service module is configured for transmitting an electronic message to a user device of said recipient using said public unique identifier.

26. The system according to one or more of the claims 23-25, wherein said communication type message is indicative of at least one of web communication or streaming media and said communication service module is configured for requesting a web page or streaming video from said recipient using said public unique identifier.

27. The system according to one or more of the claims 22-26, wherein said system further comprises a converter configured for converting said public unique identifier to at least one of a payment address identifier and a communication address identifier.

28. The system according to claim 27, wherein said system further comprises:
- a payment connection module for connecting to an external payment system for requesting said payment service using said payment address identifier;
- a communication connection module for connecting to an external communication system for requesting said communication service using said communication address identifier.

29. The system according to one or more of the claims 22-28, further comprising a login module configured for receiving a login request from a user device, said login request comprising at least one personal identifier.

30. The system according to claim 29, wherein said login module is configured for receiving said login request in a secure manner.

31. The system according to one or more of the claims 22-30, further comprising a variable session key issuer, wherein said system is configured for receiving at least a first request and a subsequent second request from a user device and said variable session key issuer is configured for issuing a first session key for use in said first request and a second session key, different from said first session key, for use in said subsequent second request.

32. The system according to one or more of the claims 22-31, wherein said public unique identifier receiver is configured for receiving said public unique identifier of said recipient from a device of said user and said system comprises:
- a storage module storing a requirement list of said recipient and a profile of a user of said payment service and/or said communication service, wherein said requirement list comprises at least one criterion regarding an item of said profile,
- a tracer configured for tracing said requirement list of said recipient using said received public unique identifier of said recipient;
- an analyser configured for checking whether said item of said profile satisfies said at least one criterion of said requirement list,
- wherein at least one of said payment service module and communication service module is configured for denying, respectively, said payment service and said communication service if said item does not satisfy said criterion.

33. The system according to one or more of the preceding claims 22-32, wherein said public unique identifier receiver is configured for receiving said public unique identifier of said recipient from a device of said user and said system comprises:
- a storage module storing at least a first profile and first requirement list of a user of said system and a second profile and a second requirement list of said recipient, said first profile and second profile comprising at least one user item and at least one recipient item, respectively, and said first requirement list and said second requirement list comprising at least one user criterion of said user and at least one recipient criterion of said recipient, respectively,
- a tracer configured for tracing said first requirement list and said second requirement list of said recipient, using said received public unique identifier of said recipient for tracing said second requirement list;
- an analyser configured for checking whether said at least one user item of said first profile satisfies said at least one recipient criterion of said second requirement list and checking whether said at least one recipient item of said second profile satisfies said at least one user criterion of said first requirement list;
- wherein at least one of said payment service module and communication service module is configured for denying at least one of said payment service and said communication service if at least one of said user item of said first profile does not satisfy said recipient criterion of said second requirement list and said recipient item of said recipient profile does not satisfy said user criterion of said first requirement list.

34. The system according to claim 33, wherein public unique identifier receiver is configured for receiving a public user identifier of said user from a device of said recipient and said tracer is configured for tracing said first requirement list on the basis of said public user identifier of said user or other login data.

35. The system according to one or more of the claims 32-34, wherein said criterion is independent of said public unique identifier of said user and/or said recipient.

36. The system according to one or more of the claims 32-35, wherein said at least one item comprises a system item and/or a user defined item.

37. The system according to claim 36, wherein a system item is a spam related item.

38. The system according to one or more of the claims 32-37, wherein said items of said profiles comprise verified items and unverified items.

39. The system according to claim 38, further comprising a verification indication receiver configured for receiving and processing a verification indication from at least one of a device of said user and a device of said recipient, said verification indication indicating that said at least one criterion of said requirement list relates to a verified item of said profile.

40. The system according to one or more of the claims 32-39, wherein said system stores at least one item prevented from checking and optionally further comprising a checking prevention indication receiver configured for receiving and processing a checking prevention indication from at least one of a device of said user and a device of said recipient, said checking prevention indication indicating that one or more items of said profile are prevented from checking by said analyser.

41. The system according to one or more of the claims 32-40, wherein said system further comprises a notification transmitter configured for transmitting a notification request to a device of the user or recipient for whom a checking prevention indication applies, said notification request presenting an option to ignore said checking prevention indication to permit checking of said at least one item against a corresponding criterion of a requirement list.

42. A device for use with the system according to claims 22-40 and in the method according to claims 1-19.

43. The device according to claim 42, wherein said device is addressable using said public unique identifier.

44. A contact card indicating a public unique identifier for use in a system according to claims 22-40 and in a method according to claims 1-19.
